# EUROPEAN PATENT SPECIFICATION

(11) **EP 2 844 117 B1**
(45) Date of publication and mention of the grant of the patent: **27.07.2016**
(21) Application number: 13717823.2
(22) Date of filing: 08.04.2013
(51) Int. Cl.: A47J 43/046, A47J 43/07

(54) **ELECTRIC BLENDERS**
ELEKTRISCHE MISCHER
MÉLANGEURS ÉLECTRIQUES

(30) Priority: 25.04.2012 GB 201207207
(43) Date of publication of application: 11.03.2015
(73) Proprietor: Kenwood Limited, Havant, Hampshire PO9 2NH (GB)
(72) Inventor: PALMER, Paul, Havant Hampshire PO9 2NH (GB); FIELDS, Robert, Havant Hampshire PO9 2NH (GB)
(74) Representative: Hector, Annabel Mary
(86) International application number: PCT/GB2013/050899
(87) International publication number: WO 2013/160654

(56) References cited:
- WO-A2-2005/089335
- DE-A1- 2 221 502
- DE-U1- 20 301 283
- US-B1- 7 717 613

## Description

This invention relates to electric blenders of the kind commonly used in the kitchen to mix, blend or otherwise prepare foodstuffs, drinks, shakes and the like. Such appliances are commonly referred to, inter alia, as "blenders", "mixers" or "food processors". Specialised versions of such appliances are also designated as "smoothie markers", "shake makers" and the like, and more recently such appliances have also been fitted with heaters so as to enable them to heat ingredients whilst they are being processed.

The present invention has application to all of the aforesaid appliances, and all of them will hereinafter be referred to, collectively and individually, as blenders.

A typical blender arrangement comprises a base which is configured to stand on a table or work-top and which supports a removable blending container, usually called a "goblet". The base contains an electric motor and the necessary controls to operate it, and presents, on its top surface, a rotary drive outlet that is driven by the motor. The base of the goblet is configured to "dock" with the drive outlet when placed for operation on the top surface of the base, and the goblet contains, near its base, a rotatable blade assembly which can be driven by a shaft passing through the base of the goblet. The shaft is driven by the drive outlet on the base and it is, of course, sealingly mounted in the base of the goblet to prevent leakage of material.

During operation, the material being blended or otherwise processed is typically spun around inside the goblet at high speed by the rotating blade which is usually mounted and rotated coaxially with the goblet. When this happens the material is thrown, by centrifugal force, up the sides of the goblet and in turn away from the blade. This action is akin to the creation of a vortex inside the goblet.

By reducing the vortex effect and ensuring that the material is kept as close as possible to the blades, it is possible to increase the blending performance of the appliance. This increase in performance can be characterised by blending material in a shorter time, producing a superior end product, and/or using less power to do so.

Various attempts have been made to reduce the vortex effect of blenders. For example, it is well known to provide ribs inside the goblet; such ribs being intended to deflect material back towards the centre of the goblet and therefore onto the blade. Other proposals have focussed on the cross- sectional shape of the goblet; for example providing a goblet of squared shape, as opposed to the more usual rounded, cylindrical shape.

DE-A1-2221502 describes a kitchen appliance with a motor-driven, starshaped cutter with a spatially fixed axis of rotation that extends from above into a vessel that can be driven by a motor. In order to improve efficiency, the vessel is supported in such a manner that it follows a circular, orbital trajectory but is restrained so as to prevent rotation about its own axis, and the vessel may perform either a tumbling action or move eccentrically.

A more recent proposal, in WO-A2-2005/089335, describes an arrangement in which a somewhat redesigned goblet is tilted backwards at a fixed angle relative to the rotational axis of the blade assembly.

Some blenders have a stirring stick that is put into the goblet from above (through an aperture in the lid of the goblet) and manipulated by the user to push material towards the blade assembly. Such an arrangement is relatively commonly used in blenders primarily designed for making smoothies.

None of the foregoing proposals has met with complete success, however, in part at least because any individual solution adopted tends to work only for a limited range of operational circumstances, whereas a principal attraction of blenders is their wide range of usefulness. Accordingly, it is an object of the present invention to provide an improved blender incorporating more widely effective means for efficiently disrupting the vortex created by the spinning blade assembly, thereby to assist in moving material towards the blade assembly and improving blending performance.

According to the invention there is provided an electric blender comprising a base housing an electric motor and supporting on an external surface thereof a rotary drive outlet capable of being driven in rotation about a drive outlet axis by the motor; the blender further comprising a goblet releasably supportable on said external surface of the base; the goblet having a longitudinal axis and supporting a rotatable blade assembly therein and further including drive means capable of picking up the rotary drive from the drive outlet and for driving the blade assembly in rotation; the blender further comprising means allowing the longitudinal axis of said goblet to move relative to the base, thereby to dynamically shift the relationship between said longitudinal axis of the goblet and said drive outlet axis during a blending process.

In some preferred embodiments of the invention, the blade assembly is constrained to rotate about an axis coincident with said drive outlet axis, thereby remaining fixed during motion of the goblet.

In alternative preferred embodiments of the invention, on the other hand, the blade assembly is constrained to rotate about an axis coincident with said longitudinal axis of the goblet, thereby tracking movement of the goblet.

The goblet may be moved manually by a user, or automatic means may be provided to move the goblet in accordance with one or more selected motion patterns and/or in a pseudo-random manner relative to the base.

In order to facilitate manual movement of the goblet by a user during a blending process, the goblet is preferably provided with a handle or similar device which can also be employed by the user for setting the goblet onto the base prior to a blending process and removing the goblet from the base after a blending process.

In some preferred embodiments of the invention, the goblet comprises a base portion and a main container portion; the base portion of said goblet supporting said blade assembly and said drive means and carrying one co-operative element of a ball and socket arrangement; and the main container portion of said goblet supporting the other co-operative element of said ball and socket arrangement; said co-operative elements being engaged whereby said main container portion of said goblet can be tilted relative to said base portion thereof.

Preferably, a sealing means is provided between said co-operative elements of said ball and socket arrangement.

A blender in accordance with one preferred embodiment of the invention is thus provided with a goblet having a main container portion which, during a blending process, can be tilted or allowed to yaw, roll and pitch as required relative to its base portion, or with regard to the blender base, with which the base portion of the goblet remains aligned.

Preferably, the main container portion of the goblet can move in any direction and is not limited to movement in any one plane. The maximum angle of tilt of the main container portion of the goblet with respect to the axis of rotation of the blade assembly is preferably not limited but, in some embodiments of the invention it is controlled.

In some preferred embodiments of the invention, the goblet is free to rotate about its own axis or the drive outlet axis; however, in other preferred embodiments it is not. These arrangements translate in practice into the choice between allowing the goblet to roll and pitch freely, but with the yaw axis being locked or not.

In some embodiments of the invention, the arrangement is such that the goblet can be moved linearly to and fro along the drive outlet axis with the rotary drive outlet latched to the drive means of the goblet, thereby restraining said blade assembly against such to and fro movement and permitting reciprocal linear relative movement to occur, along said drive outlet axis, between the goblet and the blade assembly.

In order that the invention may be clearly understood and readily carried into effect, one embodiment thereof will now be described, by way of example only and without intent to limit the claims hereof to the arrangements described. In describing the said embodiment, reference will be made to the accompanying drawings, of which:
Figure 1 is a cross-sectional view through a blender in accordance with one example of this invention showing the goblet in an upright position relative to the base; and

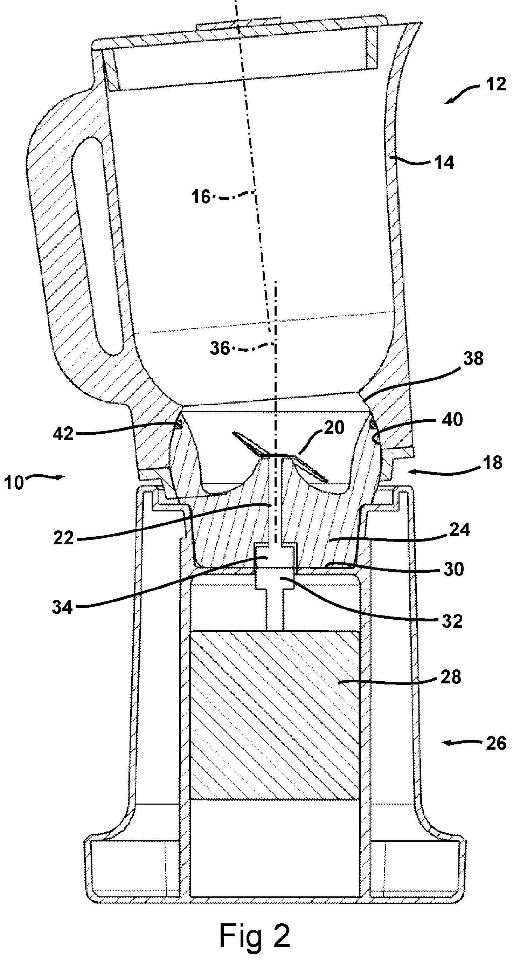

Figure 2 is a similar view, showing the goblet in an inclined position relative to the base.

Referring now to the drawings, a blender 10 in accordance with this example of the invention comprises a goblet 12 having a main container portion 14 formed as a cylindrical receptacle having a longitudinal axis 16. The goblet 12 also has a base portion 18 which contains a rotatable blade assembly 20 and a drive shaft 22 coupled to the blade assembly and traversing the base 24 of the goblet. The goblet 12 is, in this example, formed with a handle, as shown, to facilitate its handling and manipulation by a user. The goblet 12 may be formed with more than one handle if preferred.

The blender 10 further comprises a base unit 26 which houses an electric motor 28 and which supports, on an external upper surface 30, a drive outlet 32 which can be driven in rotation by the motor 28. The base unit 26 is configured to stand on a table, work-top or other supporting surface during use of the blender 10, and is provided with one or more controls (not shown) enabling a user to start, stop and optionally control the speed and/or other operational parameters of the motor 28. The base and its controls used in this example of the invention are conventional, so will not be further described herein.

When configured for use, the goblet 12 is placed upon the surface 30 of the base unit 26 with a drive coupling 34, provided on the lower end of the shaft 22, docking with the drive outlet 32 so as to pick up the rotary drive and thereby rotate the blade assembly 20. In this embodiment of the invention, the blade assembly is arranged to rotate about a fixed axis which is coincident with the rotational axis 36 of the drive outlet 32.

In accordance with this example of the invention, the main container portion 14 and the base portion 18 of the goblet 12 are each formed with respective co-operative elements 38 and 40 of a ball and socket-type arrangement.

The design of these elements 38 and 40 is such that, when the ball element 40 is fixed solid, the socket element 38 allows the main container portion 14 of the goblet 12 to yaw, roll and pitch freely relative to its base portion 18, and thus (in this example) relative to the base unit 26 of the blender; such movement only being constrained by the fixed location of the ball element 40, and ultimately by contact between any parts of the main container portion 14 of the goblet 12 and of the base unit 26 that may collide.

In practice, such colliding parts are conveniently designed to provide prescribed limits to the movement of the goblet 12, and are shaped accordingly. In some embodiments of the invention, some or all of these colliding parts are made of resilient material, or bear resilient coatings. Additionally or alternatively, the colliding parts may be made of or coated with wear-resistant materials and/or with or slippery materials such as that known by the Registered Trade mark "Teflon"; any or all of such expedients being chosen to provide desired operational and tactile arrangements.

To seal the goblet assembly, the present embodiment of the invention provides a resilient seal 42 that fits in a recess in the ball element 40 of the ball and socket-type arrangement and works against the co-operating surface of the socket element 38. In other embodiments, the seal may be fitted into a recess on the main container portion 14 of the goblet 12, or it may be constituted by a rubber over mould, gasket, insert or bellows whose primary function is to provide a seal between the relatively movable components of the goblet 12.

It will be appreciated from the foregoing that, in this embodiment of the invention, the blade assembly 20 rotates about the axis 36 of rotation of the drive outlet 32; being constrained to do this, inter alia, by the locking of ball element 40. Thus, when the main container part 14 of the goblet 12 is moved, during a food processing or other blending operation, its angle and relationship with respect to the blade assembly 20 is dynamically changed.

The motion of the main container part 14 of the goblet 12 relative to the fixed components, such as the base part 18 of the goblet 12 and the base unit 26, can be directly controlled by user interaction. Alternatively, or as a selectable option, the desired relative motion may be achieved by mechanical means, such as an arrangement utilising three vertical linear actuators mounted, equally spaced, around the inside of the base unit 26 and connected and configured to allow computer control of the relative motion.

An alternative method of imparting the desired relative motion by mechanical means utilises a rotatable, ramped disk fitted between the goblet assembly and the base unit 26.

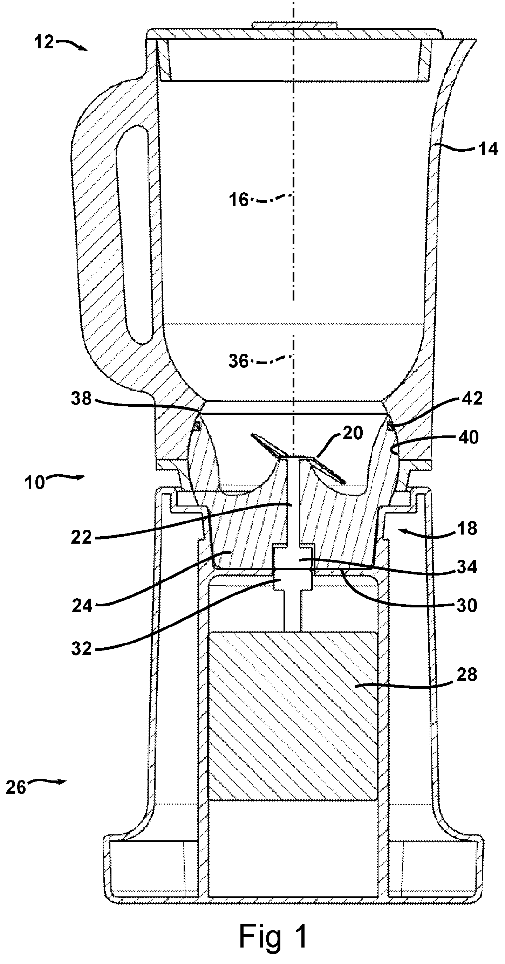

In all embodiments, movable components may be supported by springs or rubber mounts to allow the user to move the main container part 14 of the goblet 12 whilst also making the part 14 to "self-centre"; i.e. to return to its central upright position as shown in Figure 1 when not being interacted with. The motion of the goblet part 14 does not have to be directly related to the motion of the blade assembly 20 and if required these can be operated independently or simultaneously.

In operation, it has been found that a particularly beneficial movement of the goblet part 14 comprises a rolling and pitching circular motion in the opposite direction of rotation to that of the blade assembly 20 and the resulting vortex. This disrupts the vortex in a beneficial manner. Other motions, however, such as reciprocating, epicycloidal, hypotrochoidal, hypocycloidal, epitrochoidal movements, as well as random or pseudo-random movements, are also beneficial in certain operating modes of the blender.

In an alternative embodiment of the invention to that described above with reference to the drawings, a blade assembly 20 is mounted such that its axis of rotation always coincides with the longitudinal axis 16 of the goblet 12, rather than with the axis 36 of rotation of the drive outlet 32. In this case, a flexible drive joint is provided to allow continued rotational drive from the motor 28 to the blade assembly 20 despite the changes of angle imposed.

Another embodiment of the invention is additionally configured to allow the entire goblet 12 to move up and down in a vertical direction relative to the blade assembly 20. In this configuration, there is provided a shaft that is longer than the shaft 22 shown in the drawings, so that the blade assembly 20 normally sits higher in the goblet 12. Moreover, the lengthened shaft is locked in a vertical position by locking together the drive elements 32 and 34. This arrangement permits vertical movement of the goblet 12 with respect to the blade assembly 20, with the lengthened shaft (suitably sealed) sliding linearly to and fro through the base 24 of the goblet as the goblet 12 is raised and lowered. By doing this, the swept area of the blade assembly 20 can be increased, facilitating the operation of mixing food that might otherwise be prevented from interacting with the blades. This vertical movement can be controlled by direct user manipulation of the goblet 12, or by mechanical means as described above.

## Claims

1. An electric blender (10) comprising a base (26) housing an electric motor (28) and presenting at an external surface (30) thereof a rotary drive outlet (32) capable of being driven in rotation about a drive outlet axis (36) by the motor; the blender (10) further comprising a goblet (12) releasably supportable on said external surface (30) of the base (26); the goblet having a longitudinal axis (16) and supporting a rotatable blade assembly (20) therein and further including drive means (34, 22) capable of picking up the rotary drive from the drive outlet (32) and for driving the blade assembly (20) in rotation; **characterized in that** the blender further comprises means (38, 40) allowing the longitudinal axis (16) of said goblet to move relative to the base (26), thereby to dynamically shift the relationship between said longitudinal axis (16) of the goblet (12) and said drive outlet axis (36) during a blending process.

2. A blender according to claim 1, wherein the blade assembly (20) is constrained to rotate about an axis coincident with said drive outlet axis (36), thereby remaining fixed during motion of the goblet (12).

3. A blender according to claim 1, wherein the blade assembly (20) is constrained to rotate about an axis coincident with said longitudinal axis of the goblet (16), thereby tracking movement of the goblet (12).

4. A blender according to any preceding claim, comprising means whereby said goblet (12) may be moved manually by a user.

5. A blender according to any preceding claim, further comprising automatic means for moving the goblet (12) in accordance with one or more selected motion patterns and/or in a random or pseudo-random manner relative to the base (26).

6. A blender according to claim 1 or claim 2, wherein the goblet (12) comprises a base portion (18) and a main container portion (14); the base portion (18) of said goblet supporting said blade assembly (20) and said drive means (34, 22) and carrying one co-operative element (40) of a ball and socket arrangement (38, 40); and the main container portion (14) of said goblet supporting the other co-operative element (38) of said ball and socket arrangement; said co-operative elements being engaged whereby said main container portion (14) of said goblet (12) can be tilted relative to said base portion (18) thereof.

7. A blender according to claim 6, wherein a sealing means (42) is provided between said co-operative elements (38, 40) of said ball and socket arrangement.

8. A blender according to claim 6 or claim 7, wherein said main container portion (14) can, during a blending process, be tilted or caused to yaw, roll and pitch as required relative to its base portion (18), or with regard to the blender base (26), with which the base portion (18) of the goblet (12) remains aligned.

9. A blender according to any preceding claim, wherein surfaces of relatively movable components which can collide during said dynamic shifting movements are adapted to provide prescribed limits to the movement of the goblet (12).

10. A blender according to claim 9, wherein some or all of said colliding parts are made of resilient material, or bear resilient coatings.

11. A blender according to claim 9 or claim 10, wherein some or all of said colliding parts are made of or coated with wear-resistant or slippery materials.

12. A blender according to any preceding claim, wherein the arrangement is such that the goblet (12) can be moved linearly to and fro along the drive outlet axis (36) with the rotary drive outlet (32) latched to the drive means (34, 22) of the goblet, thereby restraining said blade assembly (20) against such to and fro movement and permitting reciprocal linear relative movement to occur, along said drive outlet axis (36), between the goblet (12) and the blade assembly (20).

13. A blender according to any preceding claim, wherein said base (26) is configured to stand on a table or other work surface so as to present said rotary drive outlet (32) on an upwards-facing external surface (30) and wherein said goblet (12) is provided with handle means with which a user can (a) set the goblet on said surface (30) so as to dock with said rotary drive outlet (32), (b) manipulate the goblet relative to the base during a blending operation to dynamically shift said relationship between said longitudinal axis (16) of the goblet (12) and said drive outlet axis (36) and (c) remove the goblet from the base after a blending operation.

## Patentansprüche

1. Elektrischer Mixer (10), der Folgendes umfasst:
eine Basis (26), die einen Elektromotor (28) aufnimmt und
eine Außenfläche (30) davon präsentiert, einen Drehantriebsausgang (32), der von dem Motor um eine Antriebsausgangsachse (36) in Drehung versetzt werden kann;
wobei der Mixer (10) ferner einen Becher (12) umfasst, der auf der genannten Außenfläche (30) der Basis (26) lösbar gestützt werden kann; wobei der Becher eine Längsachse (16) aufweist und eine drehbare Messerbaugruppe (20) darin stützt und ferner ein Antriebsmittel (34, 22) umfasst, das den Drehantrieb von dem Antriebsausgang (32) aufnehmen kann und die Messerbaugruppe (20) in Drehung versetzen kann;
**dadurch gekennzeichnet, dass** der Mixer ferner Mittel (38, 40) umfasst, die der Längsachse (16) des genannten Bechers ermöglichen, sich im Verhältnis zu der Basis (26) zu bewegen, wodurch das Verhältnis zwischen der genannten Längsachse (16) des Bechers (12) und der genannten Antriebsausgangsachse (36) während eines Mixvorgangs dynamisch verschoben wird.

2. Mixer nach Anspruch 1, wobei die Messerbaugruppe (20) darauf beschränkt ist, sich um eine Achse zu drehen, die mit der genannten Antriebsausgangsachse (36) übereinstimmt, wodurch sie während der Bewegung des Bechers (12) fixiert bleibt.

3. Mixer nach Anspruch 1, wobei die Messerbaugruppe (20) darauf beschränkt ist, sich um eine Achse zu drehen, die mit der genannten Längsachse des Bechers (16) übereinstimmt, wodurch die Bewegung des Bechers (12) verfolgt wird.

4. Mixer nach einem der vorhergehenden Ansprüche, der Mittel umfasst, mit denen der genannte Becher (12) von einem Benutzer manuell bewegt werden kann.

5. Mixer nach einem der vorhergehenden Ansprüche, der ferner ein automatisches Mittel zum Bewegen des Bechers (12) gemäß einem oder mehreren ausgewählten Bewegungsmustern und/oder in einer zufälligen oder pseudozufälligen Weise relativ zu der Basis (26) umfasst.

6. Mixer nach Anspruch 1 oder Anspruch 2, wobei der Becher (12) einen Basisabschnitt (18) und einen Hauptbehälterabschnitt (14) umfasst; wobei der Basisabschnitt (18) des genannten Bechers die genannte Messerbaugruppe (20) und das genannte Antriebsmittel (34, 22) stützt und ein einzelnes zusammenwirkendes Element (40) einer Kugelgelenkanordnung (38, 40) trägt; und wobei der Hauptbehälterabschnitt (14) des genannten Bechers das andere zusammenwirkende Element (38) der genannten Kugelgelenkanordnung stützt; wobei die genannten zusammenwirkenden Elemente eingreifen, wodurch der genannte Hauptbehälterabschnitt (14) des genannten Bechers (12) im Verhältnis zu dem genannten Basisabschnitt (18) davon gekippt werden kann.

7. Mixer nach Anspruch 6, wobei ein Dichtungsmittel (42) zwischen den genannten zusammenwirkenden Elementen (38, 40) der genannten Kugelgelenkanordnung vorgesehen ist.

8. Mixer nach Anspruch 6 oder Anspruch 7, wobei der genannte Hauptbehälterabschnitt (14) während eines Mixvorgangs nach Bedarf gekippt werden kann oder im Verhältnis zu seinem Basisabschnitt (18) oder im Verhältnis zur Mixerbasis (26), mit der der Basisabschnitt (18) des Bechers (12) ausgerichtet bleibt, gieren, rollen und nicken kann.

9. Mixer nach einem der vorhergehenden Ansprüche, wobei Oberflächen von relativ beweglichen Bauteilen, die während der genannten dynamischen Verschiebungsbewegungen kollidieren können, dafür ausgelegt sind, vorgeschriebene Grenzen für die Bewegung des Bechers (12) bereitzustellen.

10. Mixer nach Anspruch 9, wobei einige oder alle der genannten kollidierenden Teile aus elastischem Material hergestellt sind oder mit elastischen Beschichtungen versehen sind.

11. Mixer nach Anspruch 9 oder Anspruch 10, wobei einige oder alle der genannten kollidierenden Teile aus verschleißfesten oder rutschigen Materialien hergestellt sind oder damit beschichtet sind.

12. Mixer nach einem der vorhergehenden Ansprüche, wobei die Anordnung so beschaffen ist, dass der Becher (12), entlang der Antriebsausgangsachse (36) linear hin- und herbewegt werden kann, während der Drehantriebsausgang (32) mit den Antriebsmitteln (34, 22) des Bechers verrastet ist, wodurch die genannte Messerbaugruppe (20) an einer solchen Hin- und Herbewegung gehindert wird und eine wechselseitige lineare Relativbewegung entlang der genannten Antriebsausgangsachse (36) zwischen dem Becher (12) und der Messerbaugruppe (20) stattfinden kann.

13. Mixer nach einem der vorhergehenden Ansprüche, wobei die genannte Basis (26) dafür konfiguriert ist, auf einem Tisch oder einer anderen Arbeitsfläche zu stehen, um den genannten Drehantriebsausgang (32) auf einer nach oben gerichteten Außenfläche (30) zu präsentieren und wobei der genannte Becher (12) mit einem Griffmittel versehen ist, mit dem ein Benutzer Folgendes ausführen kann: (a) Anordnen des Bechers auf der genannten Oberfläche (30), um mit dem genannten Drehantriebsausgang (32) anzudocken, (b) Manipulieren des Bechers im Verhältnis zu der Basis während eines Mixvorgangs, um das genannte Verhältnis zwischen der genannten Längsachse (16) des Bechers (12) und der genannten Antriebsausgangsachse (36) dynamisch zu verschieben, und (c) Entfernen des Bechers von der Basis nach einem Mixvorgang.

## Revendications

1. Mélangeur électrique (10) comprenant une base (26) abritant un moteur électrique (28) et présentant au niveau d'une surface externe (30) de celle-ci une sortie d'entraînement rotatif (32) capable d'être entraînée en rotation autour d'un axe de sortie d'entraînement (36) par le moteur ; le mélangeur (10) comprenant en outre un gobelet (12) pouvant être supporté de manière détachable sur ladite surface externe (30) de la base (26) ; le gobelet ayant un axe longitudinal (16) et supportant en son sein un ensemble de pales rotatives (20) et comportant en outre un moyen d'entraînement (34, 22) capable de s'accoupler à l'entraînement rotatif provenant de la sortie d'entraînement (32) et servant à entraîner l'ensemble de pales (20) en rotation ; **caractérisé en ce que** le mélangeur comprend en outre un moyen (38, 40) permettant à l'axe longitudinal (16) dudit gobelet de se déplacer par rapport à la base (26), pour ainsi déplacer dynamiquement la relation entre ledit axe longitudinal (16) du gobelet (12) et ledit axe de sortie d'entraînement (36) durant un processus de battage.

2. Mélangeur selon la revendication 1, dans lequel l'ensemble de pales (20) est contraint de tourner autour d'un axe coïncidant avec ledit axe de sortie d'entraînement (36), restant ainsi fixe durant le mouvement du gobelet (12).

3. Mélangeur selon la revendication 1, dans lequel l'ensemble de pales (20) est contraint de tourner autour d'un axe coïncidant avec ledit axe longitudinal du gobelet (16), suivant ainsi le mouvement du gobelet (12).

4. Mélangeur selon l'une quelconque des revendications précédentes, comprenant un moyen permettant à un utilisateur de déplacer manuellement ledit gobelet (12).

5. Mélangeur selon l'une quelconque des revendications précédentes, comprenant en outre un moyen automatique pour déplacer le gobelet (12) conformément à une ou plusieurs configurations de mouvement sélectionnées et/ou d'une manière aléatoire ou pseudo-aléatoire par rapport à la base (26).

6. Mélangeur selon la revendication 1 ou la revendication 2, dans lequel le gobelet (12) comprend une partie de base (18) et une partie de contenant principal (14) ; la partie de base (18) dudit gobelet supportant ledit ensemble de pales (20) et ledit moyen d'entraînement (34, 22) et portant un élément coopératif (40) d'un agencement à rotule (38, 40) ; et la partie de contenant principal (14) dudit gobelet supportant l'autre élément coopératif (38) dudit agencement à rotule ; lesdits éléments coopératifs étant enclenchés de telle sorte que ladite partie de contenant principal (14) dudit gobelet (12) puisse être inclinée par rapport à ladite partie de base (18) du gobelet.

7. Mélangeur selon la revendication 6, dans lequel un moyen de fermeture (42) est fourni entre lesdits éléments coopératifs (38, 40) dudit agencement à rotule.

8. Mélangeur selon la revendication 6 ou la revendication 7, dans lequel ladite partie de contenant principal (14) peut, durant un processus de battage, est inclinée ou être amenée à se déplacer selon un mouvement de lacet, roulis et tangage comme il convient par rapport à sa partie de base (18), ou respectivement à base la base (26) du mélangeur, avec laquelle la partie de base (18) du gobelet (12) reste alignée.

9. Mélangeur selon l'une quelconque des revendications précédentes, dans lequel des surfaces de composants relativement mobiles pouvant entrer en collision durant lesdits mouvements de déplacement dynamique sont adaptées pour instaurer des limites prescrites au mouvement du gobelet (12).

10. Mélangeur selon la revendication 9, dans lequel une partie ou la totalité desdites parties entrant en collision sont réalisées en un matériau résilient, ou portent des revêtements résilients.

11. Mélangeur selon la revendication 9 ou la revendication 10, dans lequel une partie ou la totalité desdites parties entrant en collision sont réalisées dans des matériaux résistants à l'usure ou glissants ou revêtues de ces matériaux.

12. Mélangeur selon l'une quelconque des revendications précédentes, dans lequel l'agencement est tel que le gobelet (12) peut être déplacé linéairement selon un mouvement de va-et-vient le long de l'axe de sortie d'entraînement (36) avec la sortie d'entraînement rotative (32) verrouillée sur le moyen d'entraînement (34,22) du gobelet, retenant ainsi ledit ensemble de pales (20) contre un tel mouvement de va-et-vient et permettant un mouvement relatif linéaire réciproque, le long dudit axe de sortie d'entraînement (36), entre le gobelet (12) et l'ensemble de pales (20).

13. Mélangeur selon l'une quelconque des revendications précédentes, dans lequel ladite base (26) est configurée pour reposer sur une table ou autre surface de travail de manière à présenter ladite sortie d'entraînement rotative (32) sur une surface externe orientée vers le haut (30) et dans lequel ledit gobelet (12) est doté d'un moyen de poignée avec lequel un utilisateur peut (a) poser le gobelet sur ladite surface (30) de manière à l'enclencher avec ladite sortie d'entraînement rotatif (32), (b) manipuler le gobelet par rapport à la base durant une opération de battage pour déplacer dynamiquement ladite relation entre ledit axe longitudinal (16) du gobelet (12) et ledit axe de sortie d'entraînement (36) et (c) retirer le gobelet de la base après une opération de battage.
